# EUROPÄISCHE PATENTSCHRIFT

(11) **EP 3 924 750 B1**
(45) Veröffentlichungstag und Bekanntmachung des Hinweises auf die Patenterteilung: **29.05.2024**
(21) Anmeldenummer: 20705048.5
(22) Anmeldetag: 11.02.2020
(51) Int. Cl.: G01S 7/40, G01S 7/497, G01S 13/931, G01S 17/931, G01S 13/34

(54) **PRÜFVORRICHTUNG ZUM TEST EINES MIT ELEKTROMAGNETISCHEN WELLEN ARBEITENDEN ABSTANDSSENSORS**
TESTING DEVICE FOR TESTING A DISTANCE SENSOR THAT OPERATES USING ELECTROMAGNETIC WAVES
DISPOSITIF DE CONTRÔLE SERVANT À TESTER UN CAPTEUR D'ESPACEMENT FONCTIONNANT AVEC DES ONDES ÉLECTROMAGNÉTIQUES

(30) Priorität: 11.02.2019 US 201962803923 P
(43) Veröffentlichungstag der Anmeldung: 22.12.2021
(73) Patentinhaber: dSPACE GmbH, 33102 Paderborn (DE)
(72) Erfinder: PAUL, Jeffrey, Torrance, California 90501 (US); WATKINS, Jonathan, Lakewood, Colorado 80228 (US); ROZMANN, Michael, 82223 Eichenau (DE)
(74) Vertreter: Gesthuysen Patentanwälte
(86) Internationale Anmeldenummer: PCT/EP2020/053505
(87) Internationale Veröffentlichungsnummer: WO 2020/165191

(56) Entgegenhaltungen:
- DE-A1-102017 217 800
- DE-T2- 3 888 993
- US-A- 4 450 447
- US-A- 5 920 281
- US-A1- 2004 012 517
- Michael Rozmann: "Echte Echos im Labor, Radartestplatz", dSPACE Magazin, 2/2017, 1. Dezember 2017 (2017-12-01), Seiten 48-51, XP055679028, Gefunden im Internet: URL:https://www.dspace.com/shared/data/pdf /2017/10_Real%20Echoes%20in%20the%20Lab_de .pdf [gefunden am 2020-03-24] in der Anmeldung erwähnt

## Beschreibung

Die Erfindung betrifft eine Prüfvorrichtung zum Test eines mit elektromagnetischen Wellen arbeitenden Abstandssensors, mit einem Empfangselement zum Empfangen einer elektromagnetischen Freiraumwelle als Empfangssignal S_{RX}, mit einem Abstrahlelement zur Abstrahlung eines simulierten elektromagnetischen Reflexionssignals S_{TX}, wobei das Empfangssignal S_{RX} oder ein von dem Empfangssignal S_{RX} abgeleitetes Signal S'_{RX} über eine Zeitverzögerungsschaltung mit einer vorgebbaren Zeitverzögerung geführt wird und so zu einem zeitverzögerten Signal S_{delay} zeitverzögert wird, wobei das zeitverzögerte Signal S_{delay} oder ein von dem zeitverzögerten Signal S_{delay} abgeleitetes Signal S'_{delay} als das simulierte Reflexionssignal S_{TX} über das Abstrahlelement abgestrahlt wird.

Die vorgenannten Prüfvorrichtungen zum Test von Abstandssensoren sind seit jüngerer Zeit aus dem Bereich der Steuergeräteentwicklung und des Steuergerätetests - insbesondere im automotiven Bereich - bekannt. Ein häufiges Testszenario besteht hier darin, die Funktionalität eines Seriensteuergeräts mittels einer simulierten Umwelt zu testen. Dazu wird die Umwelt des Steuergeräts in Teilen oder auch vollständig mittels einer leistungsfähigen Simulationsumgebung in Echtzeit berechnet, wobei die Simulationsumgebung physikalische Signale, die Eingangssignale des Steuergeräts sind, generiert und wobei die Simulationsumgebung die von dem Steuergerät generierten Ausgangssignale aufnimmt und mit in die Echtzeitsimulation einfließen lässt. Steuergeräte können so gefahrlos in einer simulierten Umgebung unter praktisch "echten" Bedingungen getestet werden. Wie realitätsnah der Test ist, hängt von der Güte der Simulationsumgebung und der mit ihr berechneten Simulation ab. Steuergeräte können so also im geschlossenen Regelkreis getestet werden, weshalb derartige Testszenarien auch als Hardware-in-the-Loop-Tests bezeichnet werden.

Im vorliegenden Fall geht es um den Test von Abstandssensoren, die mit elektromagnetischen Wellen arbeiten. Im automotiven Bereich werden ganz überwiegend Radarsensoren eingesetzt. Grundsätzlich können aber auch Abstandssensoren getestet werden, die in einem anderen Frequenzbereich elektromagnetischer Wellen arbeiten, beispielsweise im Bereich des sichtbaren Lichts, oder die mit elektromagnetischen Strahlungsquellen arbeiten, die elektromagnetische Wellen mit einer langen Kohärenzlänge emittieren, wie beispielsweise bei Laseranwendungen (zum Beispiel Lidar).

In modernen Fahrzeugen werden in zunehmendem Maße Abstandssensoren eingesetzt, um das Fahrzeug und dessen Assistenzsysteme mit Umgebungsinformationen zu versorgen. So werden Position (Abstand) und Geschwindigkeit von Objekten in der Fahrzeugumgebung ermittelt. Zu den Assistenzsystemen, die derartige Umgebungsinformationen verwenden, gehören beispielsweise die adaptive Geschwindigkeitsregelung (adaptive cruise control, ACC) und das autonome Notfallbremssystem (autonomous emergency breaking, AEB). Es ist nachvollziehbar, dass der Test derartiger sicherheitsrelevanter Assistenzsysteme mit hoher Sorgfalt erfolgen muss, wobei auch das Ausbreitungsverhalten der elektromagnetischen Wellen möglichst realitätsnah zu berücksichtigen ist. Dies erfolgte in der Vergangenheit überwiegend durch sehr kostspielige und zeitaufwendige reale Fahrtests. Diese Fahrtests werden zunehmend ersetzt durch die eingangs beschriebenen Prüfvorrichtungen zum Test eines Abstandssensors, auch Prüfstände genannt, in denen auch mit Freiraumwellen gearbeitet wird. Derartige Prüfstände werden auch OTA-Prüfstände genannt (over-the-air), in denen der zu testende Abstandssensor tatsächlich elektromagnetische Wellen in den Freiraum, also ungeführt abstrahlt und auch elektromagnetische Wellen aus dem Freiraum als simuliertes Reflexionssignal empfängt. Vorteil derartiger OTA-Prüfstände ist die weitreichende Überprüfung der gesamten Wirkkette im Zusammenhang mit dem zu testenden Abstandssensor, einschließlich des Abstrahl- und Empfangsverhaltens, an denen das Sensor-Abstrahlelement und das Sensor-Empfangselement beteiligt sind.

Unabhängig davon, welche Art von elektromagnetischer Welle der zu testende Abstandssensor verwendet, werden bei dem Test von Abstandssensoren extrem hohe Anforderungen an die erforderliche elektronische Signalverarbeitung gestellt. Entfernungen eines Objekts in der Umgebung werden meist direkt über die Signallaufzeit ermittelt, die die abgestrahlten elektromagnetischen Wellen zu dem Objekt und von dem Objekt zurück zum Abstandssensor reflektiert, benötigt. Radiale Geschwindigkeitsanteile von Objekten in der Umgebung werden über Frequenzverschiebungen zwischen der abgestrahlten elektromagnetischen Welle und der reflektierten elektromagnetischen Welle bestimmt (Dopplerverschiebung).

Aufgrund der sich mit Lichtgeschwindigkeit ausbreitenden elektromagnetischen Wellen müssen hier sehr geringe Signallaufzeiten aufgelöst werden. Um beispielsweise eine Minimaldistanz von einem Meter erfassen zu können, müssen Signallaufzeiten im Nanosekundenbereich aufgelöst werden. Sollen größere Distanzen, also unabhängig von der Frage der Minimaldistanz, im Bereich von Zentimetern erfasst werden, müssen Laufzeitunterschiede auch im Sub-Nanosekundenbereich aufgelöst werden können.

Die vorliegende Erfindung beschäftigt sich mit der Nachbildung eines Objektes, das sich in einem gewissen Abstand von einem zu testenden Abstandssensor befindet. Dabei geht es vorliegend nicht um den mechanischen Aufbau der Prüfvorrichtung, sondern um deren elektronische Realisierung hinsichtlich der Signalverarbeitung.

In dem Prüfstand bzw. in der Prüfvorrichtung sollen die vom zu testenden Abstandssensor abgestrahlten elektromagnetischen Wellen tatsächlich nicht reflektiert werden, vielmehr werden die abgestrahlten elektromagnetischen Wellen von einem Empfangselement der Prüfvorrichtung empfangen und in einer nachgelagerten schnellen Signalelektronik - einem Abstand- und Bewegungssimulator - verarbeitet, nämlich durch die Zeitverzögerungsschaltung laufzeitverzögert. In Abhängigkeit von dem zu simulierenden Abstand zu einem simulierten Umfeldobjekt vom zu testenden Abstandssensor werden entsprechend zeitverzögerte Signale von der Signalelektronik einschließlich der Zeitverzögerungsschaltung erzeugt und als simuliertes - also nicht tatsächliches - Reflexionssignal über das Abstrahlelement der Prüfvorrichtung wieder in Richtung auf den zu testenden Abstandssensor emittiert. So entsteht beim Abstandssensor der Eindruck einer echten Umgebung mit gegebenenfalls auch mehreren unterschiedlich weit entfernten Objekten im simulierten Umfeld.

Aus dem Stand der Technik bekannte Prüfvorrichtungen ("Echte Echos im Labor": dSPACE Magazin 2/2017 aus Dezember 2017) zeichnen sich durch einen mechanischen Prüfstandaufbau, der hier nicht weiter betrachtet werden soll, und durch eine Signalelektronik zur Generierung eines simulierten Reflexionssignals aus, worum es vorliegend geht, speziell nämlich um die Zeitverzögerung des Empfangssignals um eine vorgebbare Zeitverzögerung. Diese vorgebbare Zeitverzögerung ergibt sich aus dem zu simulierenden Abstand unter Berücksichtigung der Lichtgeschwindigkeit als Signalausbreitungsgeschwindigkeit der elektromagnetischen Wellen.

Im Stand der Technik ist es bekannt, die Zeitverzögerungsschaltung in Form einer analogen Verzögerungsstrecke aufzubauen. Hier bedient man sich beispielsweise verschiedener physikalisch realisierter Signallaufstrecken, beispielsweise in Form von Glasfaserkabeln. Diese Signallaufstrecken können in Abhängigkeit von dem zu simulierenden Abstand und der sich daraus ergebenden vorzugebenden Zeitverzögerung hintereinander geschaltet werden, um die zu simulierende Laufstrecke möglichst genau physikalisch nachzubilden. Vorteil dieser Realisierung ist, dass sehr kurze Laufzeiten realisierbar sind - und damit sehr kurze zu simulierende Abstände -, da die analoge Signalverarbeitung gegenüber einer digitalen Lösung, also einer Lösung über ein digitales Abtastsystem, extrem schnell ist und sich nur minimale Totzeiten ergeben. So können kürzeste Abstände simuliert werden im Bereich von einigen Metern.

Auch sind Lösungen bekannt, die auf einer digital realisierten Verzögerungsstrecke beruhen. Digitale Verzögerungsstrecken sind Abtastsysteme, die naturgemäß zeitlich quantisiert arbeiten. Die Taktzeiten digitaler Systeme überschreiten häufig die Laufzeiten einer analogen Signalverarbeitung bei Weitem, sodass mit digital realisierten Verzögerungsstrecken kurze Abstände im Bereich einigen Metern nicht realisiert werden können.

In der DE 10 2017 217800 A1 ist ein Radar-Emulator/ Zielsimulator mit einer Verzögerungseinrichtung in Form einer Reihe von verschaltbaren, analogen Verzögerungsleitungen offenbart, die alternativ auch digital (z.B. als Computerprogramm) realisiert sein können.

Aufgabe der vorliegenden Erfindung ist es daher, die eingangs beschriebene Prüfvorrichtung zum Test eines mit elektromagnetischen Wellen arbeitenden Abstandssensors so auszugestalten und weiterzubilden, dass es auf verhältnismäßig einfache Weise möglich ist, aus einem Empfangssignal ein gewünschtes zeitverzögertes Reflexionssignal zu generieren und dabei einen großen Bereich vorgebbarer Zeitverzögerungen abzudecken, sodass die Prüfvorrichtung einen großen Abstandsbereich in der Lage ist zu simulieren.

Die Aufgabe ist bei der eingangs geschilderten Prüfvorrichtung zunächst und im Wesentlichen dadurch gelöst, dass die Zeitverzögerungsschaltung eine analoge Verzögerungsstrecke mit einer vorgebbaren Zeitverzögerung und eine digitale Verzögerungsstrecke mit einer ebenfalls vorgebbaren Zeitverzögerung aufweist, wobei die analoge Verzögerungsstrecke kürzere Zeitverzögerungen realisiert als die digitale Verzögerungsstrecke, abgesehen von einem möglichen Überlappungsbereich. Ferner ist vorgesehen, dass mit einer Eingangsschalteinrichtung das Empfangssignal S_{RX} oder das von dem Empfangssignal S_{RX} abgeleitete Signal S'_{RX} entweder auf den Eingang der analogen Verzögerungsstrecke oder auf den Eingang der digitalen Verzögerungsstrecke geschaltet wird und das Signal nach Durchlaufen der geschalteten Verzögerungsstrecke zu dem zeitverzögerten Signal S_{delay} wird.

Die Prüfvorrichtung realisiert also eine Zeitverzögerungsschaltung, die sich analoger und digitaler Schaltungstechnik bedient, sodass sowohl sehr kurze Entfernungen simuliert werden können (analoge Verzögerungsstrecke) wie auch deutlich längere Entfernungen (digitale Verzögerungsstrecke). Je nachdem, wie groß die vorgegebene Zeitverzögerung ist, leitet die Eingangsschalteinrichtung das Empfangssignal S_{RX} oder das von dem Empfangssignal S_{RX} abgeleitete Signal S'_{RX} entweder auf die analoge Verzögerungsstrecke oder auf die digitale Verzögerungsstrecke. Das zu verzögernde Signal durchläuft also entweder die analoge Verzögerungsstrecke oder die digitale Verzögerungsstrecke, die Eingangsschalteinrichtung lässt nicht zu, dass beide Strecken gleichzeitig mit dem zu verzögernden Signal beaufschlagt werden.

Wenn es heißt, dass das Empfangssignal S_{RX} oder ein von dem Empfangssignal S_{RX} abgeleitetes Signal S'_{RX} über eine Zeitverzögerungsschaltung geführt wird, dann ist damit gemeint, dass es weitere Signalverarbeitungsschritte geben kann zwischen dem Empfangselement und der eigentlichen Zeitverzögerungsschaltung, beispielsweise kann das Empfangssignal S_{RX} gefiltert werden, bevor es weiterverarbeitet - also verzögert - wird.

Bei einer bevorzugten Ausgestaltung der Prüfvorrichtung ist vorgesehen, dass mit einer Ausgangsschalteinrichtung der Ausgang der analogen Verzögerungsstrecke kontaktiert wird oder der Ausgang der digitalen Verzögerungsstrecke kontaktiert wird und so eine zumindest mittelbare Verbindung zuwischen dem kontaktierten Ausgang der betroffenen Verzögerungsstrecke zu dem Abstrahlelement hergestellt wird. Die Ausgangsschalteinrichtung übernimmt also die korrespondierende Funktion am Ausgang der Prüfvorrichtung zu der Funktion der Eingangsschalteinrichtung am Eingang der Prüfvorrichtung. Es wird also auch hier wahlweise entweder die analoge Verzögerungsstrecke oder die digitale Verzögerungsstrecke kontaktiert und das dort abgegriffene Signal mittelbar oder unmittelbar zu dem Abstrahlelement geführt. Wenn das abgegriffene Signal von dem jeweils kontaktierten Ausgang der betroffenen Verzögerungsstrecke mittelbar zu dem Abstrahlelement geleitet wird, dann bedeutet das auch hier, dass weitere Signalverarbeitungsschritte gegebenenfalls durchgeführt werden.

In diesem Zusammenhang ist bei einer Weiterentwicklung der Prüfvorrichtung vorgesehen, dass eine Steuervorrichtung die Eingangsschalteinrichtung und die Ausgangsschalteinrichtung synchron ansteuert, sodass entweder die analoge Verzögerungsstrecke eingangsseitig und ausgangsseitig kontaktiert wird oder die digitale Verzögerungsstrecke eingangsseitig und ausgangsseitig kontaktiert wird. Bei dieser Ausgestaltung wird also ganz sicher ausschließlich einer der beiden Signalverzögerungspfade schaltungstechnisch eingebunden in den Signalpfad vom Empfangselement zum Abstrahlelement der Prüfvorrichtung. Die jeweils andere Verzögerungsstrecke hat dann keinerlei Einfluss.

Bei einer alternativen Ausgestaltung der Prüfvorrichtung ist ein Ausgangssummierer vorgesehen, wobei mit einem Eingang des Ausgangssummierers der Ausgang der analogen Verzögerungsstrecke kontaktiert wird und mit einem weiteren Eingang des Ausgangssummierers der Ausgang der digitalen Verzögerungsstrecke kontaktiert wird. Durch den Ausgangssummierer wird dann das Summensignal aus dem Ausgangssignal der analogen Verzögerungsstrecke und dem Ausgangssignal der digitalen Verzögerungsstrecke gebildet. Auch hier wird der Ausgang des Ausgangssummierers zumindest mittelbar mit dem Abstrahleelement verbunden. In diesem Fall kann also auf eine Ausgangsschalteinrichtung verzichtet werden.

In dem zuvor dargestellten Zusammenhang kann gemäß einer bevorzugten Ausgestaltung zusätzlich vorgesehen sein, dass mit einer Überbrückungsvorrichtung über der Eingangsschalteinrichtung gewährleistet ist, dass das Empfangssignal S_{RX} oder ein von dem Empfangssignal S_{RX} abgeleitetes Signal S'_{RX} sowohl auf den Eingang der analogen Verzögerungsstrecke als auch auf den Eingang der digitalen Verzögerungsstrecke geschaltet ist. Dies ist insbesondere dann interessant, wenn der analogen Verzögerungsstrecke eine andere Zeitverzögerung vorgegeben wird als der digitalen Verzögerungsstrecke. Dann ist es möglich, bei gleichzeitigem Einsatz der analogen Verzögerungsstrecke und der digitalen Verzögerungsstrecke, durch Summierung der Ausgangssignale zwei unterschiedlich entfernte Objekte gleichzeitig zu simulieren.

Eine weitere Ausgangsgestaltung der Prüfvorrichtung zeichnet sich dadurch aus, dass die analoge Verzögerungsstrecke eine Mehrzahl hintereinander schaltbarer analoger Subverzögerungsstrecken, eine Mehrzahl an Schaltern und eine Schaltlogik aufweist, wobei der Schaltlogik eine Verzögerungszeit vorgebbar ist und die Schaltlogik die Subverzögerungsstrecken mit den Schaltern so hintereinander schaltet, dass die vorgegebene Verzögerungszeit bestmöglich erzielt wird. Die kleinste simulierbare Entfernung entspricht der Länge der kleinsten analogen Subverzögerungsstrecke. Dabei muss allerdings berücksichtigt werden, dass auch mit dem Weg von dem Empfangselement bis zu dem Eingang der analogen Verzögerungsstrecke und von dem Ausgang der analogen Verzögerungsstrecke bis zu dem Abstrahlelement auch eine Signallaufzeit verbunden ist, die stets mit zu berücksichtigen ist. Dies kann in der genannten Schaltlogik der analogen Verzögerungsstrecke geschehen, dies könnte aber auch in einer übergeordneten Steuerung geschehen. Da die Längen der Subverzögerungsstrecken festgelegt sind, kann im Regelfall eine vorgegebene Zeitverzögerung nicht ganz exakt eingestellt werden, sondern nur so exakt, wie es die Längenrasterung der Subverzögerungsstrecken zulässt. Das, was zur Berücksichtigung der sonstigen Signallaufzeit hinsichtlich der analogen Verzögerungsstrecke ausgeführt worden ist, gilt natürlich gleichermaßen auch für den Signalpfad über die digitale Verzögerungsstrecke.

Bezüglich der analogen Verzögerungsstrecke ist bei einer bevorzugten Ausgestaltung der Prüfvorrichtung vorgesehen, dass die Längen der analogen Subverzögerungsstrecken sich wie Zweierpotenzen zueinander verhalten, also binäre Teile voneinander sind. Die Länge der nächst größeren analogen Subverzögerungsstrecke entspricht also immer der doppelten Länge der nächst kleineren analogen Subverzögerungsstrecke. Vorteilhaft ist hierbei, dass die Anzahl der Schaltstellen zwischen den Subverzögerungsstrecken sehr gering ist, insbesondere beispielsweise gegenüber gleichlangen Subverzögerungsstrecken, sodass unnötige Reflexionen vermieden werden und eine hohe Signalqualität erzielt werden kann.

Hinsichtlich der digitalen Verzögerungsstrecke ist bei einer weiteren bevorzugten Ausgestaltung der Prüfvorrichtung vorgesehen, dass die digitale Verzögerungsstrecke von ihrem Eingang zu ihrem Ausgang gesehen hintereinander geschaltet aufweist: Einen Analog/Digital-Wandler, ein digitales Verzögerungselement mit einer Schaltlogik und einen Digital/Analog-Wandler.

Der Schaltlogik ist eine Verzögerungszeit vorgebbar und die Schaltlogik schaltet das digitale Verzögerungselement intern so, dass die vorgegebene Verzögerungszeit bestmöglich erzielt wird.

Vorzugsweise wird das digitale Verzögerungselement und/oder die Schaltlogik durch ein Field Programmable Gate Array (FPGA) realisiert. Eine variable Verzögerung kann dann beispielsweise durch ein Kaskade von D-Flip-Flops mit Signalabgriffen nach jedem Flip-Flop realisiert sein.

Die digitale Verzögerungsstrecke stellt ein zeitlich diskretes Abtastsystem dar. Die Abtastung beginnt schon bei der in festen Zeitschritten periodisch erfolgenden Analog/Digital-Wandlung. Mit der Abtastung geht im Frequenzbereich eine periodische Wiederholung des Spektrums des abgetasteten Signals einher. Die Digital/Analog-Wandlung kann deshalb - insbesondere bei besonderer Filterung mit einem Bandpass oder einem Tiefpass - dazu genutzt werden, eine Frequenzverschiebung des zeitlich zu verzögernden Signals zu bewirken. Wenn dies der Fall ist, ist bei einer weiteren bevorzugten Ausgestaltung vorgesehen, dass die analoge Verzögerungsstrecke einen Mischer und einen Oszillator aufweist, wobei mit dem Mischer und dem Oszillatorsignal das Empfangssignal S_{RX} oder das von dem Empfangssignal S_{RX} abgeleitete Signal S'_{RX} so frequenzverschoben wird, dass das Ausgangssignal der analogen Verzögerungsstrecke und das Ausgangssignal der digitalen Verzögerungsstrecke die gleiche Frequenz aufweisen; hier ist die Mittenfrequenz gemeint, wenn berücksichtigt wird, dass das Empfangssignal auch eine gewisse Bandbreite aufweist. Mit dem Mischer in der analogen Verzögerungsstrecke wird also bei einer geeigneten Wahl der Frequenz des Oszillatorsignals ein gleicher Effekt erzielt wie mit der Analog/Digital-Wandlung in der digitalen Verzögerungsstrecke. Dies hat den Vorteil, dass die Ausgangssignale beider Verzögerungsstrecken frequenzmäßig in gleicher Weise beeinflusst sind. Wenn dies der Fall ist, kann die nachfolgende Signalverarbeitung gemeinsam und einheitlich erfolgen, sowohl für das Ausgangssignal der analogen Verzögerungsstrecke wie auch für das Ausgangssignal der digitalen Verzögerungsstrecke. Es ist also nicht erforderlich nachfolgend getrennte Signalverarbeitungswege zu realisieren, es muss nur ein einziger weiterer Signalverarbeitungspfad implementiert werden, also beispielsweise ein Hochmischen des Signals, eine Frequenzverschiebung um eine gewünschte Dopplerfrequenz oder auch eine entsprechende frequenzmäßige Filterung.

Ein weiteres Ausführungsbeispiel ist dadurch gekennzeichnet, dass das Empfangssignal S_{RX}, bevor es zeitverzögert wird, mit einem Mischer in eine niedrigere Zwischenfrequenz heruntergemischt wird und das so aus dem Empfangssignal S_{RX} abgeleitete niederfrequente Signal S'_{RX} dann zeitverzögert wird. Diese Vorgehensweise hat den Vorteil, dass die zu verarbeitenden Frequenzen erheblich geringer sind (auch wenn die Bandbreite des Signals beibehalten wird). Beispielsweise könnte ein Empfangssignal eine Frequenz von 77 GHz aufweisen und mit dem vorgeschlagenen Mischer in eine Zwischenfrequenz von nur 2 GHz heruntergemischt werden, was erheblich geringere Ansprüche an die Bauelemente stellt, die die nachfolgende Signalverarbeitung realisieren.

Bei einer weiteren Ausgestaltung der Prüfvorrichtung ist vorgesehen, dass den Ausgängen der analogen Verzögerungsstrecke und der digitalen Verzögerungsstrecke auf der einen Seite und dem Abstrahlelement auf der andere Seite ein Dopplergenerator zwischengeschaltet ist, der das zeitverzögerte Signal S_{delay} um eine vorgebbare Dopplerfrequenz frequenzverschiebt und so das abgeleitete Signal S'_{delay} erzeugt. Durch die - oft nur geringfügige - Frequenzverschiebung kann eine radiale Bewegungskomponente zu dem zu testenden Abstandssensor simuliert werden.

Bei einer ganz bevorzugten Ausgestaltung der Prüfvorrichtung ist vorgesehen, dass die analoge Verzögerungsstrecke Zeitverzögerungen bis zu einer maximalen Zeitverzögerung t_{anolog, max} realisiert und dass die digitale Verzögerungsstrecke Zeitverzögerungen bis zu einer minimalen Zeitverzögerung t_{digi-tal, min} realisiert. Von Bedeutung ist hier, dass die maximale Zeitverzögerung t_{a-nalog, max} der analogen Verzögerungsstrecke größer ist als die minimale Zeitverzögerung t_{digital, min} der digitalen Verzögerungsstrecke, sodass ein Überlappungsbereich von t_{digital, min} bis t_{analog, max} der Zeitverzögerungen existiert. In diesem Überlappungsbereich könnte also eine Zeitverzögerung sowohl von der analogen Verzögerungsstrecke als auch von der digitalen Verzögerungsstrecke umgesetzt werden.

Es hat sich als ausgesprochen vorteilhaft herausgestellt, wenn eine Steuervorrichtung die Eingangsschalteinrichtung so ansteuert, dass bei sich ändernden vorgegebenen Zeitverzögerungen im Überlappungsbereich der Zeitverzögerungen mit einer Hysterese zwischen der analogen Verzögerungsstrecke und der digitalen Verzögerungsstrecke hin- und hergeschaltet wird. Dadurch kann die Schaltfrequenz des Wechsels zwischen der Verwendung der analogen Verzögerungsstrecke und der digitalen Verzögerungsstrecke minimiert werden. Dies ist beispielsweise relevant für die Simulation typischer Situationen im Stadtverkehr mit relativ nahen Umgebungsobjekten und beispielsweise beim Stop-and-Go im Stau. Praktisch wird dies erreicht, wenn von der analogen Verzögerungsstrecke auf die digitale Verzögerungsstrecke erst im Bereich der maximalen analogen Zeitverzögerung t_{analog, max} geschaltet wird und umgekehrt von der digitalen Verzögerungsstrecke auf die analoge Verzögerungsstrecke erst im Bereich der minimalen digitalen Zeitverzögerungen t_{digi-tal, min} geschaltet wird.

Im Einzelnen gibt es nun eine Vielzahl von Möglichkeiten, die erfindungsgemäße Prüfvorrichtung gemäß dem unabhängigen Patentanspruch 1 weiterzubilden und auszugestalten. Dies ist im Zusammenhang mit der Zeichnung in den nachfolgenden Figuren dargestellt. In der Zeichnung zeigen
- Fig. 1: eine bekannte Prüfvorrichtung zum Test eines mit elektromagnetischen Wellen arbeitenden Abstandssensors,
- Fig. 2: eine Prüfvorrichtung mit einer analogen Verzögerungsstrecke, einer digitalen Verzögerungsstrecke sowie einer Eingangsschalteinrichtung und einer Ausgangsschalteinrichtung,
- Fig. 3: eine Prüfvorrichtung mit einer analogen und einer digitalen Verzögerungsstrecke sowie einem Ausgangssummierer,
- Fig. 4: eine Prüfvorrichtung mit einer analogen und einer digitalen Verzögerungsstrecke sowie einer Überbrückungsvorrichtung für die Eingangsschalteinrichtung,
- Fig. 5: eine Prüfvorrichtung mit einer genaueren Darstellung der analogen Verzögerungsstrecke wie auch der digitalen Verzögerungsstrecke,
- Fig. 6: eine Prüfvorrichtung mit einer analogen und einer digitalen Verzögerungsstrecke sowie einem Mischer in der analogen Verzögerungsstrecke, einen Mischer im Eingangsbereich der Gesamtschaltung zur Erzeugung einer Zwischenfrequenz und einen Mischer im Ausgangsbereich der Gesamtschaltung zum Hochmischen der Frequenz des verzögerten Signals, und
- Fig. 7: eine Ausgestaltung der Steuervorrichtung zur Ansteuerung der Eingangsschalteinrichtung und zum Umschalten zwischen der anlogen Verzögerungsstrecke und der digitalen Verzögerungsstrecke mit einer Hysterese.

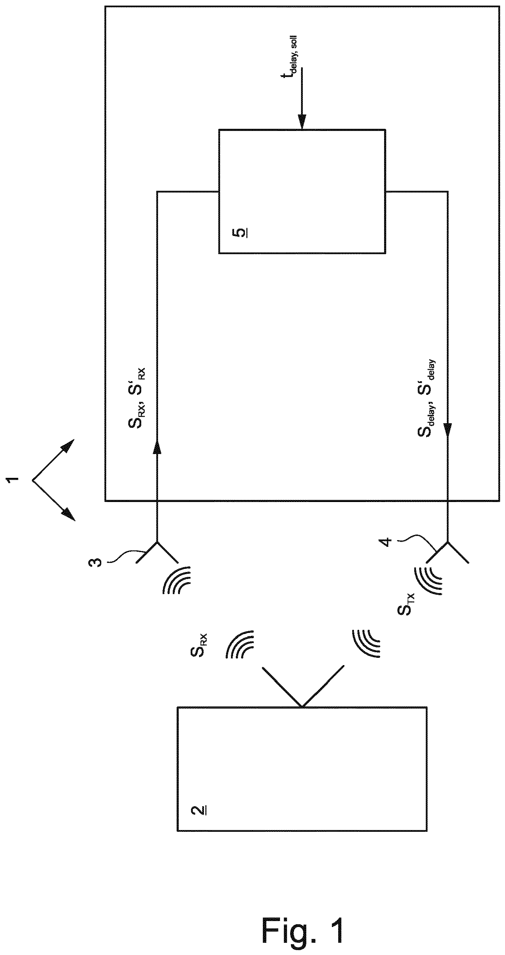

In den Fig. 1 bis 7 ist jeweils dargestellt eine Prüfvorrichtung 1 zum Test eines mit elektromagnetischen Wellen arbeitenden Abstandssensors 2, der nur in Fig. 1 schematisch dargestellt ist. Der Abstandssensor 2 emittiert eine elektromagnetische Freiraumwelle in Richtung auf die Prüfvorrichtung 1 und empfängt ein simuliertes elektromagnetisches Reflexionssignal S_{TX}, das von der Prüfvorrichtung 1 generiert wird. Zum Empfang der von dem Abstandssensor 2 emittierten Freiraumwelle weist die Prüfvorrichtung 1 ein Empfangselement 3 auf und zum Abstrahlen des simulierten elektromagnetischen Reflexionssignals S_{TX} weist die Prüfvorrichtung 1 ein Abstrahlelement 4 auf. Der Abstandssensor 2 an sich gehört nicht mit zur Prüfvorrichtung 1. Das Empfangssignal S_{RX} oder ein von dem Empfangssignal S_{RX} abgeleitetes Signal S'_{RX} wird über eine Zeitverzögerungsschaltung 5 geführt, wobei der Zeitverzögerungsschaltung 5 eine Zeitverzögerung in einem bestimmten Bereich vorgebbar ist. Das Eingangssignal der Zeitverzögerungsschaltung 5 wird so zu einem zeitverzögerten Signal S_{delay} zeitverzögert. Das zeitverzögerte Signal S_{delay} oder ein von dem zeitverzögerten Signal S_{delay} abgeleitetes Signal S'_{delay} wird dann als das simulierte Reflexionssignal S_{TX} über das Abstrahlelement 4 abgestrahlt.

In Fig. 1 ist angedeutet, dass die zu erzielende Zeitverzögerung t_{delay}, ₛₒₗₗ der Zeitverzögerungsschaltung 5 als Information zugeführt wird. Für die hier dargestellte Umsetzung der Prüfvorrichtung 1 kommt es nicht auf die genaue technische Umsetzung an, wie der Zeitverzögerungsschaltung 5 diese Information genau zugeführt wird. Üblicherweise wird die Vorgabe für die einzustellende Zeitverzögerung aus einem Umfeldsimulator kommen, der die zu simulierende Szene mit Umfeldobjekten simuliert und entsprechende Positions-, Geschwindigkeits- und/oder Beschleunigungsinformationen der Umgebungsobjekte bereithält. Ist beispielsweise bekannt, dass der Abstand des zu simulierenden Objekts von dem zu testenden Abstandssensor 30 m beträgt, so wird unter Berücksichtigung der Lichtgeschwindigkeit als Signallaufzeit einer elektromagnetischen Welle eine entsprechende Zeitverzögerung berechnet und als Zeitverzögerung t_{delay}, ₛₒₗₗ vorgegeben.

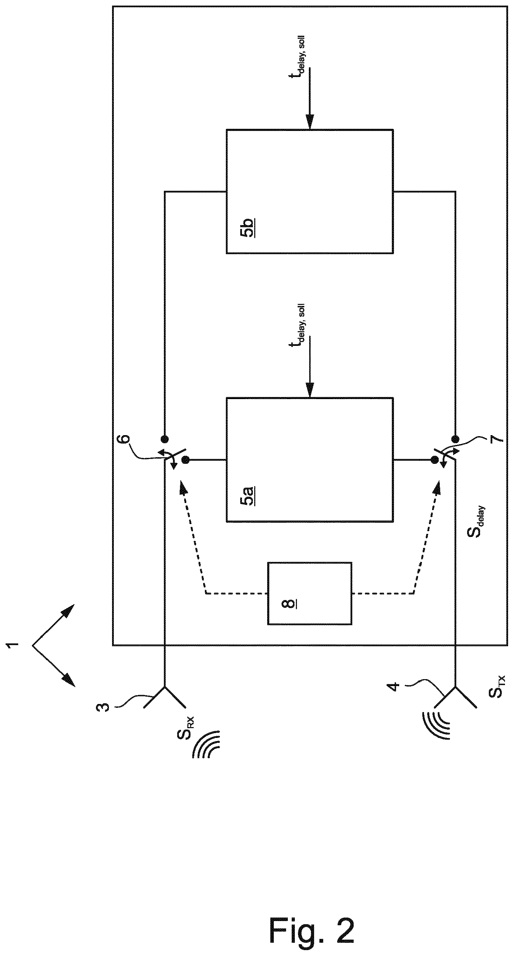

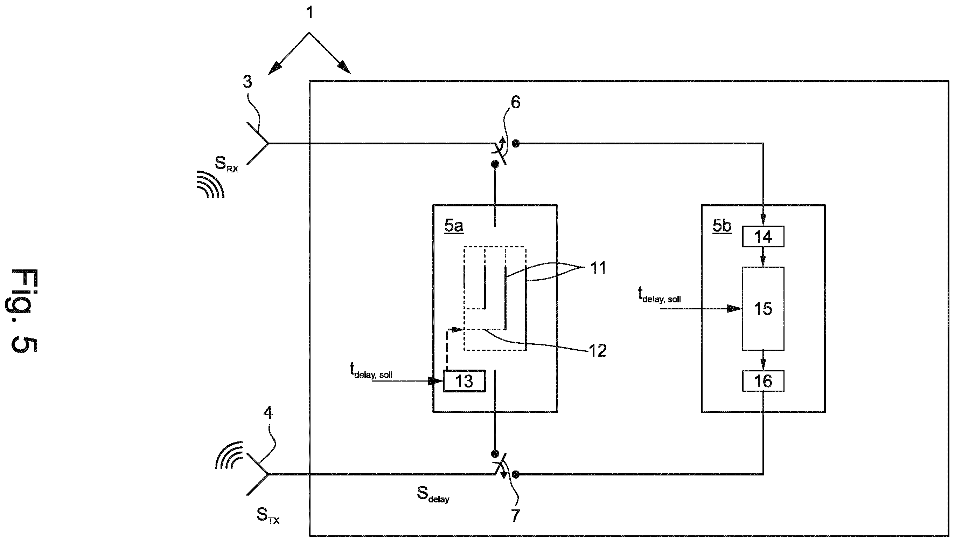

Bei den in den Fig. 2 bis 6 dargestellten Prüfvorrichtungen 1 ist nun jeweils vorgesehen, dass die Zeitverzögerungsschaltung 5 eine analoge Verzögerungsstrecke 5a mit einer vorgebbaren Zeitverzögerung t_{delay, soll} und eine digitale Verzögerungsstrecke 5b mit einer ebenfalls vorgebbaren Zeitverzögerung t_{delay}, ₛₒₗₗ aufweist. Die Verzögerungszeiten t_{delay}, ₛₒₗₗ sind in den Fig. 2 und 5 eingezeichnet und sie sind zur Wahrung einer besseren Übersichtlichkeit in den anderen Figuren nicht extra eingezeichnet, aber auch hier gibt es natürlich entsprechend vorgegebene Zeitverzögerungen t_{delay}, ₛₒₗₗ. Die vorgebbaren Zeitverzögerungen t_{delay, soll} können für die analoge Verzögerungsstrecke 5a und für die digitale Verzögerungsstrecke 5b gleich sein, sie können sich aber auch voneinander unterscheiden.

Die Verzögerungsstrecken 5a, 5b sind so realisiert, dass die analoge Verzögerungsstrecke 5a kürzere Zeitverzögerungen realisiert als die digitale Verzögerungsstrecke 5b, abgesehen von einem möglichen Überlappungsbereich, in dem also von beiden Verzögerungsstrecken 5a, 5b eine entsprechende Zeitverzögerung t_{delay} realisiert werden könnte.

Mit einer Eingangsschalteinrichtung 6 wird das Empfangssignal S_{RX} oder das von dem Empfangssignal S_{RX} abgeleitete Signal S'_{RX} entweder auf den Eingang der analogen Verzögerungsstrecke 5a oder auf den Eingang der digitalen Verzögerungsstrecke 5b geschaltet. Das Signal wird nach Durchlaufen der geschalteten Verzögerungsstrecke dann zu dem zeitverzögerten Signal S_{delay}. Durch die alternative Beaufschlagung entweder der analogen Verzögerungsstrecke 5a oder der digitalen Verzögerungsstrecke 5b ist nur eine der beiden Verzögerungsstrecken 5a, 5b aktiv. Bei sinnvoller Ansteuerung der Eingangsschalteinrichtungen 6 wird nur diejenige Verzögerungsstrecke betrieben, die eine entsprechende vorgegebene Zeitverzögerung t_{delay}, ₛₒₗₗ überhaupt realisieren kann. Durch diese Maßnahme werden auch Störungen, beispielsweise in Form von Signalübersprechungen, zwischen den Verzögerungsstrecken vermieden.

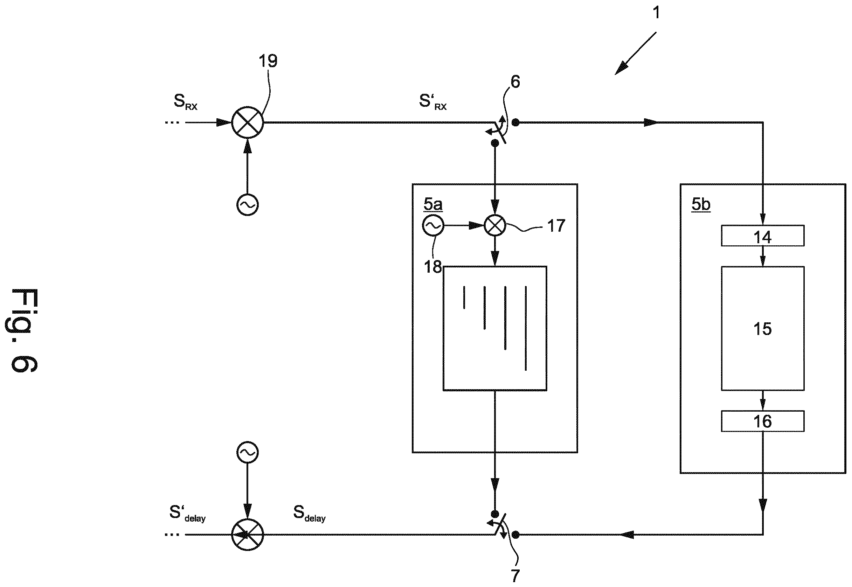

Fig. 2 zeigt ferner, dass mit einer Ausgangsschalteinrichtung 7 der Ausgang der analogen Verzögerungsstrecke 5a kontaktiert wird oder der Ausgang der digitalen Verzögerungsstrecke 5b kontaktiert wird. So wird eine zumindest mittelbare Verbindung zwischen dem kontaktierten Ausgang der betroffenen Verzögerungsstrecke 5a, 5b zu dem Abstrahlelement 4 hergestellt. In Zusammenhang mit der Eingangsschalteinrichtung 6 kann damit sichergestellt werden, dass sich nur eine der beiden Verzögerungsstrecken 5a, 5b, also entweder die analoge Verzögerungsstrecke 5a oder die digitale Verzögerungsstrecke 5b, auf den Ausgang der Prüfvorrichtung 1, also auf das Abstrahlelement 4, signalmäßig auswirkt. Dazu ist, wie ebenfalls in Fig. 2 dargestellt, eine Steuervorrichtung 8 vorgesehen, die die Eingangsschalteinrichtung 6 und die Ausgangsschalteinrichtung 7 synchron ansteuert, sodass - wie bereits ausgeführt - entweder die analoge Verzögerungsstrecke 5a eingangsseitig und ausgangsseitig kontaktiert wird oder die digitale Verzögerungsstrecke 5b eingangsseitig und ausgangsseitig kontaktiert wird. Auf die Darstellung der Steuerungsvorrichtung 8 hinsichtlich der Ansteuerung der Eingangsschalteinrichtung 6 oder der Ausgangschalteinrichtung 7 ist in den Fig. 5 und 6 zur Verbesserung der Übersichtlichkeit der Darstellungen verzichtet worden. Natürlich muss die Steuervorrichtung 8 auch hier vorhanden sein, um die Eingangsschalteinrichtung 6 und/oder die Ausgangsschalteinrichtung 7 anzusteuern.

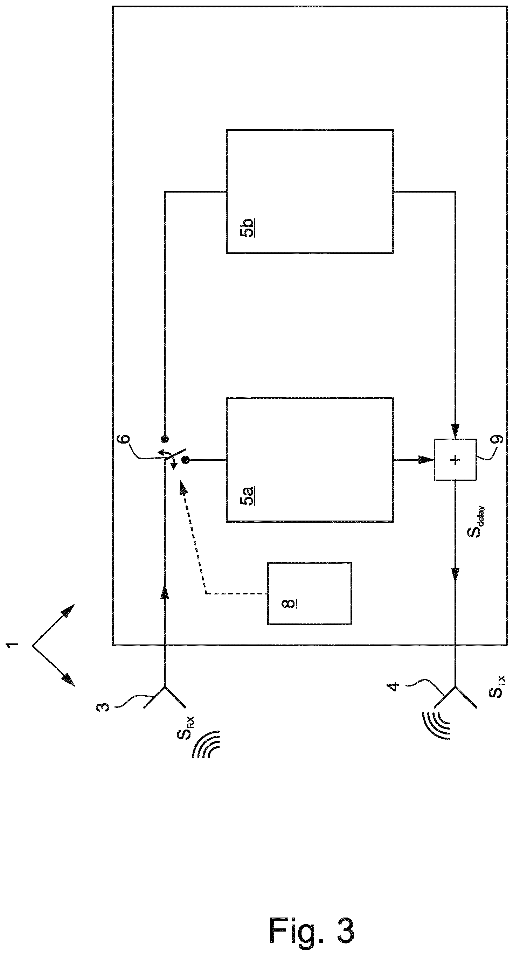

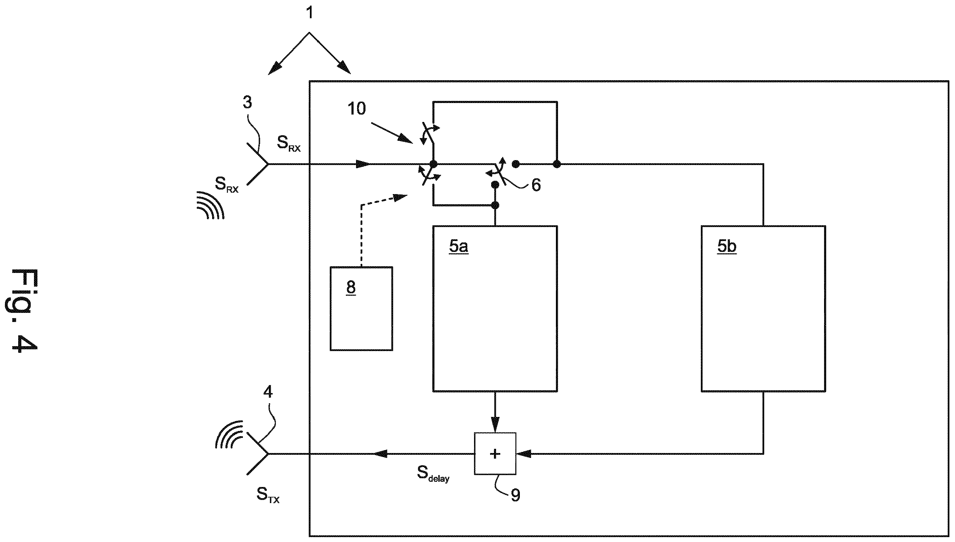

Alternativ zu dem Einsatz der Ausgangsschalteinrichtung 7 ist in den Ausführungsbeispielen in den Fig. 3 und 4 ein Ausgangssummierer 9 vorgesehen. Mit einem Eingang des Ausgangssummierers 9 ist der Ausgang der analogen Verzögerungsstrecke 5a kontaktiert und mit einem weiteren Eingang des Ausgangssummierers 9 ist der Ausgang der digitalen Verzögerungsstrecke 5b kontaktiert. Durch den Ausgangssummierer 9 wird das Summensignal aus dem Ausgangssignal der analogen Verzögerungsstrecke 5a und dem Ausgangssignal der digitalen Verzögerungsstrecke 5b gebildet. Der Ausgang des Ausgangssummierers leitet das verzögerte Summensignal dann - zumindest mittelbar - dem Abstrahlelement 4 zu. Durch diese Maßnahme wird zunächst keine Ausgangsschalteinrichtung mehr benötigt.

In Zusammenhang mit einer weiteren Ausgestaltung kommt der Verwendung des Ausgangssummierers 9 jedoch eine besondere Bedeutung zu, die aus Fig. 4 ersichtlich ist. In Fig. 4 ist dargestellt, dass mit einer Überbrückungsvorrichtung 10 über der Eingangsschalteinrichtung 6 gewährleistet ist, dass das Empfangssignal S_{RX} (oder ein von dem Empfangssignal S_{RX} abgeleitetes Signal S'_{RX}) sowohl auf den Eingang der analogen Verzögerungsstrecke 5a als auch auf den Eingang der digitalen Verzögerungsstrecke geschaltet ist. In diesem Ausnahmefall werden also die analoge Verzögerungsstrecke 5a und die digitale Verzögerungsstrecke 5b tatsächlich parallel und zeitgleich betrieben. Die Ansteuerungen der Überbrückungsvorrichtung 10, die in der Darstellung gemäß Fig. 4 aus zwei Schaltelementen gebildet ist, erfolgt in der Darstellung ebenfalls durch die Steuervorrichtung 8. Die gleichzeitige Beaufschlagung sowohl der analogen Verzögerungsstrecke 5a als auch der digitalen Verzögerungsstrecke 5b ist dann sinnvoll, wenn den beiden Verzögerungsstrecken 5a, 5b voneinander abweichende Zeitverzögerungen t_{delay}, ₛₒₗₗ vorgegeben werden. In diesem Fall können also von der Prüfvorrichtung 1 zwei Objekte mit verschiedenen Abständen gleichzeitig simuliert werden. Dies ist deshalb ein Sonderfall, weil die dargestellten Prüfvorrichtungen 1 mit einem Empfangselement 3 und einem Abstrahlelement 4 dazu dienen, ein Umfeldobjekt mit einer gewissen azimutalen Auslenkung gegenüber der Hauptorientierung des Abstandssensors zu simulieren. Dazu werden in einem Prüfstand mehrere der hier beschriebenen Prüfvorrichtungen 1 eingesetzt, wobei die Prüfvorrichtungen 1 azimutal gegenüber dem zu testenden Abstandssensor ausgelenkt werden können. Dass zwei Umfeldobjekte in genau der gleichen azimutalen Richtung angeordnet sind und sich nicht gegenseitig verdecken, sodass tatsächlich zwei Entfernungssignale zu erwarten wären, ist ein seltenes Ereignis in der Umfeldsimulation.

In Fig. 5 ist eine mögliche Implementierung der analogen Verzögerungsstrecke 5a und auch der digitalen Verzögerungsstrecke 5b etwas genauer dargestellt. Es ist zu erkennen, dass die analoge Verzögerungsstrecke 5a eine Mehrzahl hintereinander schaltbarer analoger Subverzögerungsstrecken 11, eine Mehrzahl an Schaltern 12 (hier nur gestrichelt angedeutet) und eine Schaltlogik 13 aufweist. Der Schaltlogik 13 ist eine Zeitverzögerung t_{delay}, ₛₒₗₗ vorgebbar. Auf Grundlage dieser Informationen schaltet die Schaltlogik 13 die Subverzögerungsstrecken 11 - zumindest teilweise - mit den Schaltern 12 so hintereinander, dass die vorgegebene Zeitverzögerung t_{delay}, ₛₒₗₗ bestmöglich erzielt wird.

Eine Besonderheit bei der Realisierung der in Fig. 5 dargestellten analogen Verzögerungsstrecke 5a stellt die Variation der Längen der analogen Subverzögerungsstrecken 11 dar. Die Längen der analogen Subverzögerungsstrecken 11 verhalten sich wie Zweierpotenzen zueinander, sind also binäre Teile. Die Länge einer bestimmten Subverzögerungsstrecke 11 verdoppelt sich also beim Übergang zu der nächst längeren Subverzögerungsstrecke 11. Durch diese geschickte Aufteilung kann die Anzahl der erforderlichen Subverzögerungsstrecken 11 kleingehalten werden, zudem reduziert sich der Anteil der Schaltstellen gegenüber anderen Lösungen erheblich (beispielsweise bei der Verwendung nur identisch langer Subverzögerungsstrecken). Dadurch reduziert sich der Aufwand bei der Realisierung der analogen Verzögerungsstrecke 5a und auch parasitäre Effekte - z. B. Reflexionen an den Schaltstellen - bei der Signalführung werden minimiert.

Fig. 5 ist ferner zu entnehmen, dass die digitale Verzögerungsstrecke 5b von ihrem Eingang zu ihrem Ausgang gesehen und hintereinander geschaltet einen Analog/Digital-Wandler 14, ein digitales Verzögerungselement 15 mit einer Schaltlogik und einen Digital/Analog-Wandler 16 aufweist. Der Schaltlogik ist ebenfalls eine Verzögerungszeit t_{delay}, ₛₒₗₗ vorgebbar, wobei die Schaltlogik das digitale Verzögerungselement 15 intern so schaltet, dass die vorgegebene Verzögerungszeit t_{delay}, ₛₒₗₗ bestmöglich eingestellt wird. Im vorliegenden Fall ist das digitale Verzögerungselement 15 mit einem Field Programmable Gate Array realisiert, genauso wie die Schaltlogik. Die digitale Verzögerungsstrecke 5b stellt ein Abtastsystem dar, sodass der Analog/Digital-Wandler 14, das digitale Verzögerungselement 15 mit der Schaltlogik und auch der Digital/Analog-Wandler 16 in einem zeitdiskreten Raster arbeiten.

Dem Ausführungsbeispiel gemäß Fig. 6 liegt die Erkenntnis zugrunde, dass die schon durch den Analog/Digital-Wandler vollzogene Abtastung des Empfangssignals S_{RX} bzw. des von dem Empfangssignal S_{RX} abgeleiteten Empfangssignal S'_{RX} sich periodisch wiederholende Spektren des abgetasteten Empfangssignals bewirkt, wenn ein Frequenzspektrum des abgetasteten Signals betrachtet wird. Dieser Effekt kann also dazu genutzt werden, das abgetastete Signal in einer von der Mittenfrequenz des analogen Signals abweichenden Frequenz zu bearbeiten. In diesem Fall würde ein entsprechender Band- oder Tiefpassfilter eingesetzt werden, um den gewünschten Frequenzbereich zu extrahieren. Um am Ausgang der analogen Verzögerungsstrecke 5a ein Signal mit der gleichen Frequenz zu erhalten wie am Ausgang der digitalen Verzögerungsstrecke 5b, ist bei der Prüfvorrichtung 1 gemäß Fig. 6 vorgesehen, dass die analoge Verzögerungsstrecke 5a einen Mischer 17 und einen Oszillator 18 aufweist, wobei mit dem Mischer 17 und dem Oszillatorsignal des Oszillators 18 das Empfangssignal S_{RX} oder das von dem Empfangssignal S_{RX} abgeleitete Signal S'_{RX} so frequenzverschoben wird, dass das Ausgangssignal der analogen Verzögerungsstrecke 5a und das Ausgangssignal der digitalen Verzögerungsstrecke 5b die gleiche Frequenz aufweisen, gemeint ist die Mittenfrequenz. Dies hat den Vorteil, dass die nachgelagerte Signalverarbeitung nicht unterschiedlich oder veränderlich ausgelegt werden muss, je nachdem, ob ein Signal von der analogen Verzögerungsstrecke 5a oder von der digitalen Verzögerungsstrecke 5b erhalten wird, vielmehr können dann ein und dieselben Komponenten für die weitere Signalverarbeitung genutzt werden.

In Fig. 6 ist ferner dargestellt, dass das Empfangssignal S_{RX}, bevor es zeitverzögert wird, mit einem Mischer 19 in eine niedrigere Zwischenfrequenz heruntergemischt wird und das so aus dem Empfangssignal S_{RX} abgeleitete niederfrequente Signal S'_{RX} dann zeitverzögert wird. Diese Maßnahme ist auch bei allen anderen in den Figuren dargestellten Ausführungsbeispielen möglich.

Was in den Figuren nicht dargestellt ist, gleichwohl in einer bevorzugten Ausgestaltung realisiert wird, ist, dass zwischen die Ausgänge der analogen Verzögerungsstrecke 5a und der digitalen Verzögerungsstrecke 5b einerseits und dem Abstrahlelement 4 andererseits ein Dopplergenerator zwischengeschaltet ist, der das zeitverzögerte Signal S_{delay} um eine vorgebbare Dopplerfrequenz frequenzverschiebt und so das abgeleitete Signal S'_{delay} erzeugt. Durch diese Maßnahme können auch radiale Geschwindigkeitskomponenten der simulierenden Umfeldobjekte simuliert werden.

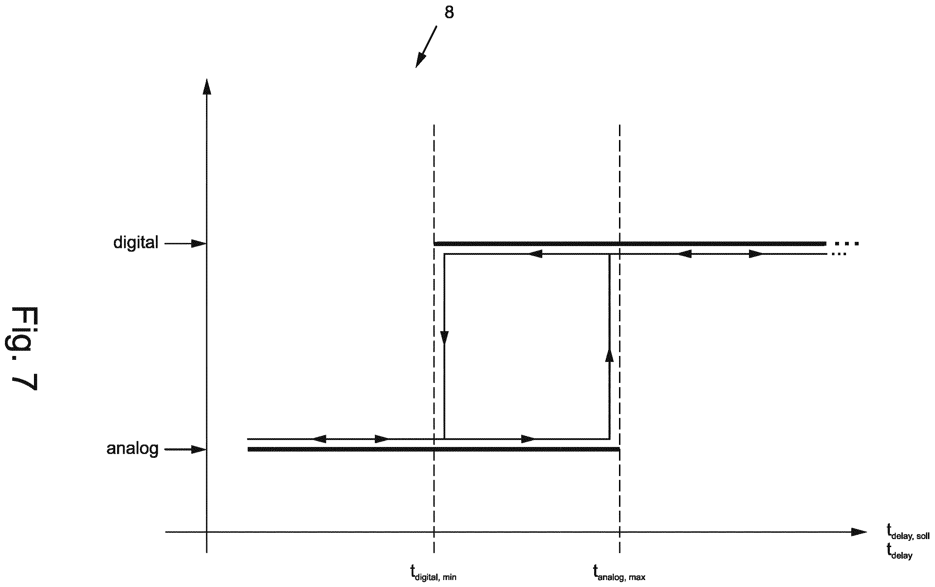

Fig. 7 zeigt eine besondere Schaltstrategie der Steuervorrichtung 8. Hier wird davon ausgegangen, dass die analoge Verzögerungsstrecke 5a Zeitverzögerungen t_{delay} bis zu einer maximalen Zeitverzögerung t_{analog, max} realisiert und dass die digitale Verzögerungsstrecke 5b Zeitverzögerungen t_{delay} bis zu einer minimalen Zeitverzögerung t_{digital, min} realisiert. Die maximale Zeitverzögerung t_{analog, max} der analogen Verzögerungsstrecke 5a ist dabei größer als die minimale Zeitverzögerung t_{digital, min} der digitalen Verzögerungsstrecke 5b, sodass ein Überlappungsbereich von t_{digital, min} bis t_{analog, max} existiert, in dem beide Verzögerungsstrecken 5a, 5b gleichermaßen für eine entsprechende Signalverzögerung sorgen können. Es ist nun vorgesehen, dass die Steuervorrichtung 8 die Eingangsschalteinrichtung 6 so ansteuert, dass bei sich ändernden vorgegebenen Zeitverzögerungen t_{delay, soll} im Überlappungsbereich der Zeitverzögerungen mit einer Hysterese zwischen der analogen Verzögerungsstrecke 5a und der digitalen Verzögerungsstrecke 5b hin- und hergeschaltet wird. Dargestellt ist in Fig. 7, dass von der analogen Verzögerungsstrecke 5a auf die digitale Verzögerungsstrecke 5b erst im Bereich der maximalen Zeitverzögerung t_{analog, max} geschaltet wird und umgekehrt von der digitalen Verzögerungsstrecke 5b auf die analoge Verzögerungsstrecke 5b erst im Bereich der minimalen Zeitverzögerung t_{digital, min} geschaltet wird. Hierdurch wird ein häufiges Hin- und Herschalten zwischen der analogen Verzögerungsstrecke 5a und der digitalen Verzögerungsstrecke 5b vermieden, sodass auch negative Effekte bei der strukturellen Umschaltung zwischen den beiden Verzögerungsstrecken 5a, 5b reduziert werden.

### Bezugszeichen

- 1: Prüfvorrichtung
- 2: Abstandssensor
- 3: Empfangselement
- 4: Abstrahlelement
- 5: Zeitverzögerungsschaltung
- 5a: analoger Verzögerungsstrecke
- 5b: digitale Verzögerungsstrecke
- 6: Eingangsschalteinrichtung
- 7: Ausgangsschalteinrichtung
- 8: Steuervorrichtung
- 9: Ausgangssummierer
- 10: Überbrückungsvorrichtung
- 11: Subverzögerungsstrecken
- 12: Schalter
- 13: Schaltlogik
- 14: Analog/Digital-Wandler
- 15: Verzögerungselement
- 16: Digital/Analog-Wandler
- 17: Mischer
- 18: Oszillator
- 19: Mischer

## Patentansprüche

1. Prüfvorrichtung (1) zum Test eines mit elektromagnetischen Wellen arbeitenden Abstandssensors (2), mit einem Empfangselement (3) zum Empfangen einer elektromagnetischen Freiraumwelle als Empfangssignal S_{RX}, mit einem Abstrahlelement (4) zur Abstrahlung eines simulierten elektromagnetischen Reflexionssignals S_{TX}, wobei das Empfangssignal S_{RX} oder ein von dem Empfangssignal S_{RX} abgeleitetes Signal S'_{RX} über eine Zeitverzögerungsschaltung (5) mit einer vorgebbaren Zeitverzögerung t_{delay}, ₛₒₗₗ geführt wird und so zu einem zeitverzögerten Signal S_{delay} zeitverzögert wird, wobei das zeitverzögerte Signal S_{delay} oder ein von dem zeitverzögerten Signal S_{delay} abgeleitetes Signal S'_{delay} als das simulierte Reflexionssignal S_{TX} über das Abstrahlelement (4) abgestrahlt wird,
**dadurch gekennzeichnet,**
**dass** die Zeitverzögerungsschaltung (5) eine analoge Verzögerungsstrecke (5a) mit einer vorgebbaren Zeitverzögerung t_{delay}, ₛₒₗₗ und eine digitale Verzögerungsstrecke (5b) mit einer ebenfalls vorgebbaren Zeitverzögerung t_{delay}, ₛₒₗₗ aufweist,
**dass** die analoge Verzögerungsstrecke (5a) kürzere Zeitverzögerungen realisiert als die digitale Verzögerungsstrecke (5b), abgesehen von einem möglichen Überlappungsbereich,
**dass** mit einer Eingangsschalteinrichtung (6) das Empfangssignal S_{RX} oder das von dem Empfangssignal S_{RX} abgeleitete Signal S'_{RX} entweder auf den Eingang der analogen Verzögerungsstrecke (5a) oder auf den Eingang der digitalen Verzögerungsstrecke (5b) geschaltet wird und das Signal nach Durchlaufen der geschalteten Verzögerungsstrecke zu dem zeitverzögerten Signal S_{delay} wird.

2. Prüfvorrichtung (1) nach Anspruch 1, **dadurch gekennzeichnet, dass** mit einer Ausgangsschalteinrichtung (7) der Ausgang der analogen Verzögerungsstrecke (5a) kontaktiert wird oder der Ausgang der digitalen Verzögerungsstrecke (5b) kontaktiert wird und so eine zumindest mittelbare Verbindung zwischen dem kontaktierten Ausgang der betroffenen Verzögerungsstrecke (5a, 5b) zu dem Abstrahlelement (4) hergestellt wird.

3. Prüfvorrichtung (1) nach Anspruch 2, **dadurch gekennzeichnet, dass** eine Steuervorrichtung (8) die Eingangsschalteinrichtung (6) und die Ausgangsschalteinrichtung (7) synchron ansteuert, sodass entweder die analoge Verzögerungsstrecke (5a) eingangsseitig und ausgangsseitig kontaktiert wird oder die digitale Verzögerungsstrecke (5b) eingangsseitig und ausgangsseitig kontaktiert wird.

4. Prüfvorrichtung (1) nach Anspruch 1, **dadurch gekennzeichnet, dass** mit einem Eingang eines Ausgangssummierers (9) der Ausgang der analogen Verzögerungsstrecke (5a) kontaktiert wird und mit einem weiteren Eingang des Ausgangssummierers (9) der Ausgang der digitalen Verzögerungsstrecke (5b) kontaktiert wird, durch den Ausgangssummierer (9) das Summensignal aus dem Ausgangssignal der analogen Verzögerungsstrecke (5a) und dem Ausgangssignal der der digitalen Verzögerungsstrecke (5b) gebildet wird und der Ausgang des Ausgangssummierers (9) zumindest mittelbar mit dem Abstrahlelement (4) verbunden ist.

5. Prüfvorrichtung (1) nach Anspruch 4, **dadurch gekennzeichnet, dass** mit einer Überbrückungsvorrichtung (10) über der Eingangsschalteinrichtung (6) gewährleistet ist, dass das Empfangssignal S_{RX} oder ein von dem Empfangssignal S_{RX} abgeleitetes Signal S'_{RX} sowohl auf den Eingang der analogen Verzögerungsstrecke (5a) als auch auf den Eingang der digitalen Verzögerungsstrecke (5b) geschaltet ist.

6. Prüfvorrichtung (1) nach einem der Ansprüche 1 bis 5, **dadurch gekennzeichnet, dass** die analoge Verzögerungsstrecke (5a) eine Mehrzahl hintereinanderschaltbarer analoger Subverzögerungsstrecken (11), eine Mehrzahl an Schaltern (12) und eine Schaltlogik (13) aufweist, wobei der Schaltlogik (13) eine Zeitverzögerung t_{delay, soll} vorgebbar ist, und die Schaltlogik (13) die Subverzögerungsstrecken (11) mit den Schaltern (12) so hintereinander schaltet, dass die vorgegebene Zeitverzögerung bestmöglich erzielt wird.

7. Prüfvorrichtung (1) nach Anspruch 6, **dadurch gekennzeichnet, dass** die Längen der analogen Subverzögerungsstrecken (11) sich wie Zweierpotenzen zueinander verhalten, also binäre Teile sind.

8. Prüfvorrichtung (1) nach einem der Ansprüche 1 bis 7, **dadurch gekennzeichnet, dass** die digitale Verzögerungsstrecke (5b) von ihrem Eingang zu ihrem Ausgang gesehen und hintereinander geschaltet aufweist einen Analog/Digital-Wandler (14), ein digitales Verzögerungselement (15) mit einer Schaltlogik und einen Digital/Analog-Wandler (16), wobei der Schaltlogik eine Verzögerungszeit t_{delay}, ₛₒₗₗ vorgebbar ist und die Schaltlogik das digitale Verzögerungselement (15) intern so schaltet, dass die vorgegebene Verzögerungszeit t_{delay, soll} bestmöglich erzielt wird, insbesondere wobei das digitale Verzögerungselement (15) und/oder die Schaltlogik durch ein FPGA realisiert ist, insbesondere durch hintereinandergeschaltete D-Flip-Flops.

9. Prüfvorrichtung (1) nach Anspruch 8, **dadurch gekennzeichnet, dass** die analoge Verzögerungsstrecke (5a) einen Mischer (17) und einen Oszillator (18) aufweist, vorzugsweise auch einen Bandpass oder einen Tiefpass, wobei mit dem Mischer (17) und dem Oszillatorsignal das Empfangssignal S_{RX} oder das von dem Empfangssignal S_{RX} abgeleitete Signal S'_{RX} so frequenzverschoben wird, dass das Ausgangssignal der analogen Verzögerungsstrecke (5a) und das Ausgangssignal der digitalen Verzögerungsstrecke (5b) die gleiche Frequenz aufweisen.

10. Prüfvorrichtung (1) nach einem der Ansprüche 1 bis 9, **dadurch gekennzeichnet, dass** das Empfangssignal S_{RX}, bevor es zeitverzögert wird, mit einem Mischer (19) in eine niedrigere Zwischenfrequenz heruntergemischt wird und das so aus dem Empfangssignal S_{RX} abgeleitete niederfrequente Signal S'_{RX} dann zeitverzögert wird.

11. Prüfvorrichtung (1) nach einem der Ansprüche 1 bis 10, **dadurch gekennzeichnet, dass** zwischen die Ausgänge der analogen Verzögerungsstrecke (5a) und der digitalen Verzögerungsstrecke (5b) und dem Abstrahlelement (4) ein Dopplergenerator zwischengeschaltet ist, der das zeitverzögerte Signal S_{delay} um eine vorgebbare Dopplerfrequenz frequenzverschiebt und so das abgeleitete Signal S'_{delay} erzeugt.

12. Prüfvorrichtung (1) nach einem der Ansprüche 1 bis 11, **dadurch gekennzeichnet, dass** die analoge Verzögerungsstrecke (5a) Zeitverzögerung t_{de-lay} bis zu einer maximalen Zeitverzögerung t_{analog, max} realisiert und dass die digitale Verzögerungsstrecke (5b) Zeitverzögerung t_{delay} bis zu einer minimalen Zeitverzögerung t_{digital, min} realisiert, wobei die maximale Zeitverzögerung t_{ana-log, max} der analogen Verzögerungsstrecke (5a) größer ist als die minimale Zeitverzögerung t_{digital, min} der digitalen Verzögerungsstrecke (5b), sodass ein Überlappungsbereich von t_{digital, min} bis t_{analog, max} der Zeitverzögerungen existiert, wobei eine Steuervorrichtung (8) die Eingangsschalteinrichtung (6) so ansteuert, dass bei sich ändernden vorgegebenen Zeitverzögerungen t_{delay, soll} im Überlappungsbereich der Zeitverzögerungen mit einer Hysterese zwischen der analogen Verzögerungsstrecke (5a) und der digitalen Verzögerungsstrecke (5b) hin- und hergeschaltet wird, insbesondere von der analogen Verzögerungsstrecke (5a) auf die digitale Verzögerungsstrecke (5b) erst im Bereich der maximalen Zeitverzögerung t_{analog, max} geschaltet wird und umgekehrt von der digitalen Verzögerungsstrecke (5b) auf die analoge Verzögerungsstrecke (5a) erst im Bereich der minimalen Zeitverzögerung t_{digital, min} geschaltet wird.

## Claims

1. Testing device (1) for testing a distance sensor (2) operating with electromagnetic waves, having a receiving element (3) for receiving an electromagnetic free-space wave as a receive signal S_{RX}, having a radiating element (4) for radiating a simulated electromagnetic reflection signal S_{TX}, wherein the receive signal S_{RX} or a signal S'_{RX} derived from the receive signal S_{RX} is routed via a time delay circuit (5) with a predeterminable time delay t_{delay,soll}, and is thus time-delayed to a time-delayed signal S_{delay}, wherein the time-delayed signal S_{delay} or a signal S'_{delay} derived from the time-delayed signal S_{delay} is radiated as the simulated reflection signal S_{TX} via the radiating element (4),
**characterized in**
**that** the time delay circuit (5) has an analog delay path (5a) with a predeterminable time delay t_{delay,soll} and a digital delay path (5b) with a likewise predeterminable time delay t_{delay,soll},
**that** the analog delay path (5a) implements shorter time delays than the digital delay path (5b), apart from a possible overlap region,
**that** an input switch (6) is used to switch the receive signal S_{RX} or the signal S'_{RX} derived from the receive signal S_{RX} either to the input of the analog delay path (5a) or to the input of the digital delay path (5b), and the signal becomes the time-delayed signal S_{delay} after it has passed through the connected delay path.

2. Testing device (1) according to claim 1, **characterized in that** the output of the analog delay path (5a) or the output of the digital delay patch (5b) is contacted by an output switch (7), and at least an indirect connection is thus established between the contacted output of the delay path (5a, 5b) concerned and the radiating element (4).

3. Testing device (1) according to claim 2, **characterized in that** a control device (8) synchronously controls the input switch (6) and the output switch (7) so that either the analog delay path (5a) is contacted on the input side and output side or the digital delay path (5b) is contacted on the input side and output side.

4. Testing device (1) according to claim 1, **characterized in that** the output of the analog delay section (5a) is contacted by an input of an output summing unit (9) and the output of the digital delay section (5b) is contacted by a further input of the output summing unit (9), the sum signal is formed by the output summing unit (9) from the output signal of the analog delay path (5a) and the output signal of the digital delay path (5b), and the output of the output summing unit (9) is connected at least indirectly to the radiating element (4).

5. Testing device (1) according to claim 4, **characterized in that** a bridging device (10) above the input switch (6) ensures that the receive signal S_{RX} or a signal S'_{RX} derived from the receive signal S_{RX} is connected both to the input of the analog delay path (5a) and to the input of the digital delay path (5b).

6. Testing device (1) according to any one of the claims 1 to 5, **characterized in that** the analog delay path (5a) has a plurality of analog delay sub-paths (11) which can be connected in series, a plurality of switches (12) and a switching logic (13), wherein the switching logic (13) is able to be preset with a time delay t_{delay,soll}, and the switching logic (13) connects the delay sub-paths (11) in series with the switches (12) in such a manner that the predetermined time delay is achieved in the best possible manner.

7. Testing device (1) according to claim 6, **characterized in that** the lengths of the analog delay sub-paths (11) behave like powers of two with respect to one another, i.e. are binary parts.

8. Testing device (1) according to any one of claims 1 to 7, **characterized in that** the digital delay path (5b), viewed from its input to its output and connected in series, has an analog-to-digital converter (14), a digital delay element (15) with a switching logic and a digital-to-analog converter (16), wherein a delay time t_{delay,soll} can be predetermined for the switching logic and the switching logic internally switches the digital delay element (15) such that the predetermined delay time t_{delay,soll} is achieved in the best possible manner, in particular wherein the digital delay element (15) and/or the switching logic is implemented by an FPGA, in particular by D-flip-flops connected in series.

9. Testing device (1) according to claim 8, **characterized in that** the analog delay path (5a) has a mixer (17) and an oscillator (18), preferably also a bandpass or a low-pass filter, wherein the receive signal S_{RX} or the signal S'_{RX} derived from the receive signal S_{RX} is frequency-shifted by the mixer (17) and the oscillator signal in such a way that the output signal of the analog delay path (5a) and the output signal of the digital delay path (5b) have the same frequency.

10. Testing device (1) according to any one of claims 1 to 9, **characterized in that** the receive signal S_{RX}, before being time-delayed, is mixed down with a mixer (19) to a lower intermediate frequency and the low-frequency signal S'_{RX} thus derived from the receive signal S_{RX} is then time-delayed.

11. Testing device (1) according to any one of the claims 1 to 10, **characterized in that** a Doppler generator is interposed between the outputs of the analog delay path (5a) and the digital delay path (5b) and the radiating element (4), which Doppler generator frequency shifts the time-delayed signal S_{delay} by a predeterminable Doppler frequency and thus generates the derived signal S'_{de-lay}.

12. Testing device (1) according to any one of claims 1 to 11, **characterized in that** the analog delay path (5a) implements time delay t_{delay} up to a maximum time delay t_{analog,max} and that the digital delay path (5b) implements time delay t_{delay} up to a minimum time delay t_{digital,min}, wherein the maximum time delay t_{analog,max} of the analog delay path (5a) is greater than the minimum time delay t_{digital,min} of the digital delay path (5b), so that an overlap range of t_{digital,min} to t_{analog,max} of the time delays exists, wherein a control device (8) controls the input switch (6) in such a manner that, in the event of changing predetermined time delays t_{delay,soll} in the overlap range, the time delays are switched back and forth with a hysteresis between the analog delay path (5a) and the digital delay path (5b), in particular is only switched from the analog delay path (5a) to the digital delay path (5b) in the range of the maximum time delay t_{analog,max} and vice versa is only switched from the digital delay path (5b) to the analog delay path (5a) in the range of the minimum time delay t_{digital,min}.

## Revendications

1. Dispositif de test (1) destiné à tester un capteur de distance (2) fonctionnant avec des ondes électromagnétiques, ledit dispositif de test comprenant un élément de réception (3) destiné à recevoir une onde électromagnétique en espace libre comme signal reçu S_{RX}, un élément d'émission (4) destiné à émettre un signal de réflexion électromagnétique simulé S_{TX}, le signal de réception S_{RX} ou un signal S'_{RX} dérivé du signal de réception S_{RX} étant guidé via un circuit à retard (5) présentant un retard spécifié t_{deiay}, ₛₒₗₗ et étant ainsi retardé pour donner un signal retardé S_{delay}, le signal retardé S_{delay} ou un signal S'_{delay} dérivé du signal retardé S_{delay} étant émis comme signal de réflexion simulé S_{TX} par le biais de l'élément d'émission (4),
**caractérisé en ce que**
le circuit à retard (5) comporte une voie à retard analogique (5a) présentant un retard spécifié t_{delay,soll} et une voie à retard numérique (5b) présentant un retard également spécifié t_{delay,soll},
la voie à retard analogique (5a) réalise des retards plus courts que la voie à retard numérique (5b), à l'exception d'une éventuelle zone de chevauchement,
un module de commutation d'entrée (6) commute le signal de réception S_{RX} ou le signal S'_{RX} dérivé du signal de réception S_{RX} soit sur l'entrée de la voie à retard analogique (5a) soit sur l'entrée de la voie à retard numérique (5b) et, après avoir parcouru la voie à retard commuté, le signal devient le signal retardé S_{delay}.

2. Dispositif de test (1) selon la revendication 1, **caractérisé en ce que** la sortie de la voie à retard analogique (5a) est mise en contact avec un module de commutation de sortie (7) ou la sortie de la voie à retard numérique (5b) est mise en contact avec un module de commutation de sortie et ainsi une liaison au moins indirecte est établie entre la sortie contactée de la voie à retard concerné (5a, 5b) et l'élément d'émission (4).

3. Dispositif de test (1) selon la revendication 2, **caractérisé en ce qu'**un dispositif de commande (8) commande le module de commutation d'entrée (6) et le module de commutation de sortie (7) de manière synchrone de sorte que la voie à retard analogique (5a) soit contacté du côté entrée et du côté sortie ou bien la voie à retard numérique (5b) est contacté du côté entrée et du côté sortie.

4. Dispositif de test (1) selon la revendication 1, **caractérisé en ce que** la sortie de la voie à retard analogique (5a) est en contact avec une entrée d'un sommateur de sortie (9) et la sortie de la voie à retard numérique (5b) est en contact avec une autre entrée du sommateur de sortie (9), le signal de somme est formé par le sommateur de sortie (9) à partir du signal de sortie de la voie à retard analogique (5a) et du signal de sortie de la voie à retard numérique (5b) et la sortie du sommateur de sortie (9) est reliée au moins indirectement à l'élément d'émission (4).

5. Dispositif de test (1) selon la revendication 4, **caractérisé en ce qu'**un dispositif de pontage (10) pardessus le module de commutation d'entrée (6) garantit que le signal de réception S_{RX} ou un signal S'_{RX} dérivé du signal de réception S_{RX} est appliqué aussi bien à l'entrée de la voie à retard analogique (5a) qu'à l'entrée de la voie à retard numérique (5b).

6. Dispositif de test (1) selon l'une des revendications 1 à 5, **caractérisé en ce que** la voie à retard analogique (5a) comporte une pluralité de sous-voies à retard analogiques (11) pouvant être montés en série, une pluralité de commutateurs (12) et une logique de commutation (13), un délai t_{delay,soll} pouvant être spécifié à la logique de commutation (13), et la logique de commutation (13) montant les sous-voies à retard (11) en série avec les commutateurs (12) afin d'obtenir le retard spécifié de la meilleure façon possible.

7. Dispositif de test (1) selon la revendication 6, **caractérisé en ce que** les longueurs des sous-voies à retard analogiques (11) se comportent comme des puissances de deux les unes par rapport aux autres, c'est-à-dire qu'elles sont des parties binaires.

8. Dispositif de test (1) selon l'une des revendications 1 à 7, **caractérisé en ce que** la voie à retard numérique (5b) comporte, dans une vue dirigée de son entrée à sa sortie et suivant un montage en série, un convertisseur analogique/numérique (14), un élément à retard numérique (15) pourvu d'une logique de commutation et un convertisseur numérique/analogique (16), un retard t_{delay,soll} pouvant être spécifié à la logique de commutation et la logique de commutation commutant l'élément à retard numérique (15) en interne afin d'obtenir le retard spécifié t_{delay,soll} de la meilleure façon possible, en particulier l'élément à retard numérique (15) et/ou la logique de commutation étant réalisés par un FPGA, en particulier par des bascules D montées en série.

9. Dispositif de test (1) selon la revendication 8, **caractérisé en ce que** la voie à retard analogique (5a) comporte un mélangeur (17) et un oscillateur (18), de préférence également un filtre passe-bande ou passe-bas, le signal de réception S_{RX} ou le signal S'_{RX} dérivé du signal de réception S_{RX} étant décalé en fréquence avec le mélangeur (17) et le signal d'oscillateur de sorte que le signal de sortie de la voie à retard analogique (5a) et le signal de sortie de la voie à retard numérique (5b) ont la même fréquence.

10. Dispositif de test (1) selon l'une des revendications 1 à 9, **caractérisé en ce que**, avant d'être retardé, le signal de réception S_{RX} est mixé à une fréquence intermédiaire inférieure à l'aide d'un mélangeur (19) et le signal à basse fréquence S_{RX} dérivé du signal de réception S'_{RX} est alors retardé.

11. Dispositif de test (1) selon l'une des revendications 1 à 10, **caractérisé en ce qu'**un générateur Doppler est interposé entre les sorties de la voie à retard analogique (5a) et de la voie à retard numérique (5b) et l'élément d'émission (4), qui décale en fréquence le signal retardé S_{delay} d'une fréquence Doppler pouvant être spécifiée et qui génère ainsi le signal dérivé S'_{delay}.

12. Dispositif de test (1) selon l'une des revendications 1 à 11, **caractérisé en ce que** la voie à retard analogique (5a) réalise un retard t_{delay} jusqu'à un retard maximal t_{analog,max} et **en ce que** la voie à retard numérique (5b) réalise un retard t_{delay} jusqu'à un retard minimal t_{digital,min}, le retard maximal t_{analog,max} de la voie à retard analogique (5a) étant supérieur au retard minimal t_{digital,min} de la voie à retard numérique (5b) de sorte qu'il existe une zone de chevauchement de t_{digital,min} à t_{analog,max} des retards, un dispositif de commande (8) commandant le module de commutation d'entrée (6) de façon à effectuer, lorsque les retards spécifiés t_{delay,soll} varient dans la zone de chevauchement des retards, une commutation avec une hystérésis alternativement entre la voie à retard analogique (5a) et la voie à retard numérique (5b), en particulier de façon à effectuer une commutation de la voie à retard analogique (5a) à la voie à retard numérique (5b) seulement dans la zone du retard maximal t_{analog,max} et vice versa de la voie à retard numérique (5b) à la voie à retard analogique (5a) seulement dans la zone du retard minimal t_{digital,min}.
